(19) **Europäisches Patentamt**
**European Patent Office**
**Office européen des brevets**

(11) **EP 2 784 453 B1**

(12) **EUROPÄISCHE PATENTSCHRIFT**

(45) Veröffentlichungstag und Bekanntmachung des Hinweises auf die Patenterteilung:
**10.10.2018 Patentblatt 2018/41**

(51) Int Cl.:
*G01G 7/04* (2006.01)  *G01G 3/14* (2006.01)

(21) Anmeldenummer: **13161569.2**

(22) Anmeldetag: **28.03.2013**

(54) **Digitale Wägezellenlinearisierung**

Digital weighing cell linearization

Linéarisation numérique de cellules de balances

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.10.2014 Patentblatt 2014/40**

(73) Patentinhaber: **Mettler-Toledo GmbH**
**8606 Greifensee (CH)**

(72) Erfinder:
• **Schrag, Daniel**
**8426 Lufingen (CH)**

• **Rupp, Daniel**
**8552 Felben-Wellhausen (CH)**
• **Trautweiler, Christoph**
**8105 Regensdorf (CH)**
• **Burkhard, Hans-Rudolf**
**8492 Wila (CH)**

(74) Vertreter: **Mettler-Toledo**
**IP Department**
**Im Langacher 44**
**8606 Greifensee (CH)**

(56) Entgegenhaltungen:
**US-A- 4 802 541**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Gewichtskraftbestimmung mittels einer Kraftmessvorrichtung.

Bei Kraftmessvorrichtungen, zum Beispiel bei Wägezellen, welche nach dem Prinzip der elektromagnetischen Kraftkompensation arbeiten, im Englischen bekannt unter Electro-Magnetic Force Restauration oder abgekürzt EMFR-Wägezellen genannt, wird die Gewichtskraft des Wägeguts entweder direkt oder über einen oder mehrere, auf Lagern gelagerte(n) Kraftübertragungshebel zu einem elektromechanischen Messaufnehmer übertragen. Der Messaufnehmer erzeugt eine der Gewichtskraft des Wägeguts entsprechende Kompensationskraft und stellt dabei ein elektrisches Signal zur Verfügung, welches durch eine Wägeelektronik, der Verarbeitungseinheit, weiterverarbeitet und zur Anzeige gebracht wird.

Eine EMFR-Wägezelle weist meist ein Parallelogramm auf mit einem feststehenden Parallelschenkel und einen mit diesem durch zwei Parallelführungen verbundenen beweglichen Parallelschenkel, welcher als Lastaufnahmebereich dient. In Hebelsystemen wird die Gewichtskraft über ein an den Lastaufnahmebereich gekoppeltes, längssteifes, biegeelastisches Koppelelement an einen Wägebalken übertragen, welcher am feststehenden Parallelschenkel abgestützt ist. Der Zweck einer solchen Wägezelle besteht darin, die der aufgelegten Last entsprechende Gewichtskraft soweit zu untersetzen, dass der die Kompensationskraft erzeugende Messaufnehmer ein der Gewichtskraft entsprechendes Messsignal ausgeben kann. Bekanntermassen sind die Verbindungsstellen der einzelnen Elemente in hochauflösenden Wägezellen durch Biegelager ausgestaltet. Biegelager definieren eine Drehachse zwischen den zwei gekoppelten Elementen und können bei einer einstückigen Wägezelle, auch monolithische Wägezelle oder Monoblock genannt, als dünne Materialstellen ausgestaltet sein.

In EMFR-Wägezellen bei denen die Gewichtskraft direkt, also ohne Untersetzung der Kompensationskraft mittels Hebeln, von der vom Messaufnehmer erzeugten Kompensationskraft kompensiert wird, sind die Parallelführungen meist als Federelemente bzw. Federgelenke oder Membranen ausgestaltet. Bei solchen Wägezellen, auch Direktmesssysteme genannt, wird von einem Messaufnehmer eine der Gewichtskraft der Last entsprechende gleich grosse Kompensationskraft entgegengebracht.

Der Messaufnehmer in einer EMFR-Wägezelle nach Stand der Technik ist üblicherweise als stromdurchflossene Spule in einem Permanentmagneten ausgebildet, so dass die Gewichtskraft des Wägeguts anhand der elektrischen Ersatzgrösse, dem Spulenstrom I, bestimmt werden kann. Da die Gewichtskraft zur Kompensationskraft proportional ist, und diese ihrerseits proportional zum Spulenstrom I, ist der Spulenstrom I auch proportional zur Gewichtskraft, und damit wiederum proportional zur Masse der aufgelegten Last. Befindet sich die Wägezelle im Gleichgewichtszustand so gilt demnach die Funktion bzw. die Formel (Temperatureinflüsse ausgenommen):

$$F' = f(I) = k * I$$

F': berechnete Gewichtskraft der aufgelegten Masse m
k: Übertragungskonstante
I: Spulenstrom

Die Übertragungskonstante k wird für jeden Wägezellentyp bei dessen Auslegung bestimmt, und in einer Verarbeitungseinheit zur Berechnung der Kompensationskraft abgespeichert. Die Übertragungskonstante ist also abhängig vom Lastaufnahmesystem der Wägezelle, und beschreibt wie ein gemessener Spulenstrom in eine Kraft F' übertragen wird.

Bei Messaufnehmern, welche üblicherweise in einer EMFR-Wägezelle verwendet werden, bewegt sich die stromdurchflossene Spule im Luftspalt des Permanentmagneten aufgrund der Lorentzkraft. Als Lorentzkraft, hier die Kompensationskraft der Spule, bezeichnet man die Kraft, die ein magnetisches Feld auf eine bewegte elektrische Ladung ausübt. Fliesst durch einen elektrischen Leiter, hier die Wicklung der Spule, senkrecht zu den Feldlinien eines ihn umgebenden Magnetfelds ein Strom, führt dies zu einer Kraft auf den Leiter, und somit auf die Spule des Messaufnehmers.

Das Magnetfeld, zum Beispiel gebildet durch den Permanentmagneten, sollte idealerweise homogen sein, ist es in der Praxis aber meist nicht. Das Magnetfeld kann also für verschiedene Positionen der Spule im Permanentmagneten etwas variieren. Das heisst bei gleichbleibendem Strom durch die Spule ist die erzeugte Kompensationskraft positionsabhängig. Dies wirkt sich wiederum auf die Berechnung des Wägeresultats aus. Befindet sich der Wägebalken nicht in der Gleichgewichtslage, für welche die Übertragungskonstante k bestimmt wurde, sondern etwas oberhalb oder unterhalb davon, weicht die abgespeicherte Übertragungskonstante von der tatsächlichen Übertragungskonstante ab. Ist eine Wägezelle Erschütterungen, Vibrationen oder dergleichen ausgesetzt, so beeinflusst die abweichende Übertragungskonstante die schnelle und präzise Ermittlung des Wägeresultats, und es kommt zu Nullpunktabweichungen. Insbesondere bei dynamischen Kontrollwagen tritt dieses Problem verstärkt auf.

Um diesem Problem entgegenzuwirken werden in Kraftmessvorrichtungen nach dem Stand der Technik elektronische Filter auf das Kompensationskraftsignal angewendet. Im Betrieb einer Kraftmessvorrichtung wird aufgrund von Temperaturabhängigkeiten des Magneten und der Federkonstanten der Lager die Berechnung der Kompensationskraft durch eine Korrekturfunktion an die Umgebungsbedingungen angepasst. Ebenso werden dynamische Effekte beim Einschalten oder einem Lastwechsel berücksichtigt und im Weiteren auch zeitabhängige Kompensationen durchgeführt. Die Berechnung der Gewichtskraft der aufgelegten Masse erfolgt dann nach einer Formel der Funktion:

$$F' = f(I, T, t)$$

Diese Funktion überträgt die Signale des Spulenstroms und verschiedener Temperatursensoren zeitabhängig in einen Anzeigewert, welcher auf einem Display zur Anzeige gebracht wird, und wird auch als Übertragungsfunktion bezeichnet. Die Übertragungskonstante ist demnach ein Teil der Übertragungsfunktion. Der Spulenstrom, wird dabei durch eine Positionskontrolleinheit nach folgender Funktion geregelt,

$$I = f(F, z, T, t)$$

und berücksichtigt neben Temperatureinflüssen (T) und dynamischen Effekten (t) auch etwaige Störgrössen (z).

Eine dynamische Kontrollwaage ist ein System, das Wägegüter verwiegt, während sie innerhalb einer Produktionslinie über die Waage geführt werden, die Wägegüter in vorgegebene Gewichtszonen klassiert und die Wägegüter entsprechend der Gewichtsklassierung sortiert oder ausschleust. Einsatzgebiete von Kontrollwaagen sind vielseitig und umfassen zum Beispiel:

- Prüfung auf Unter- bzw. Übergewicht von Produkten
- Einhaltung der gesetzlichen Bestimmungen für den Nettoinhalt von verpackten Gütern
- Reduzierung von Produktverschwendungen durch Verwendung der mittels der Kontrollwaage gewonnenen Gewichtswerte zur Einstellung der Füllmaschinen
- Klassierung von Produkten nach Gewicht
- Messung und Aufzeichnung der Leistung der Produktionsanlage bzw. -linie
- Stückzahl-Verifizierung anhand des Gewichts

Mit Kontrollwaagen werden 100% der Produkte einer Produktlinie gewogen. So werden dann auch die gesamten Produktionsdaten gesammelt für Produktzählung, Chargennachverfolgung oder für die Produktionsstatistik.

Ein Kontrollwägesystem besteht üblicherweise aus Zuführband, Wägeband, Abführband mit Sortiereinrichtung und Wägeterminal mit Benutzerschnittstelle. Das zwischen Zu- und Abführband gelegene Wägeband ist auf einer Wägezelle gelagert, welche das Produkt beim Überfahren des Wägebandes verwiegt.

Im Betrieb einer dynamischen Kontrollwaage gelangt das Produkt vom Zuführband auf das Wägeband, wird dort während des Transports verwogen, und wird über das Abführband weiter transportiert. Die zur Ermittlung des Wägeresultats verfügbare Zeit ist abhängig von der Länge und der Transportgeschwindigkeit des Wägebandes. Das auf der Wägezelle gelagerte Wägeband wird durch das Produkt bei der Übernahme vom Zuführband belastet und bei der Abgabe an das Abführband wieder entlastet. Beim kontinuierlichen Wägen der Produkte wird so die Wägezelle einer Wechselbelastung ausgesetzt. Diese Wechselbelastung führt zu Schwingungen des Wägebandes, welche einen merklichen Einfluss auf die Bestimmung des Wägeresultats haben, angesichts der sehr kurzen zur Verfügung stehenden Zeit, in welcher das Produkt vollständig auf dem Wägeband aufliegt.

Um ein Wägeresultat unter Schwingungs- oder Vibrationseinfluss schneller zu bestimmen schlägt die EP 0 430 695 A2 vor, zwei Wägezellen gleichzeitig zu verwenden. Eine erste Wägezelle nimmt die aufgelegte Last auf und gibt ein der erzeugten Kompensationskraft entsprechendes Signal an eine Verarbeitungseinheit weiter. Eine zweite Wägezelle ist dazu bestimmt ohne die zusätzlich aufgelegte Last ein Signal an die Verarbeitungseinheit weiterzuleiten, welches dem Schwing- und Vibrationsverhalten der ersten Wägezelle mit einem Standardgewicht entspricht. Die Verarbeitungseinheit subtrahiert das Signal der zweiten Wägezelle vom Signal der ersten Wägezelle, blendet so die Schwingungen und Vibrationen im Signal der ersten Wägezelle aus, wodurch das Wägeresultat entsteht. Ein Nachteil dabei ist, dass für eine Wägestelle jeweils zwei Wägezellen verwendet werden müssen, was die Produktkosten stark erhöht. Es muss aber auch immer in Betracht gezogen werden, dass die Trägheiten beider Wägezellen nicht gleich sein könnten, und somit das Schwing- und Vibrationsverhalten der Wägezellen unterschiedlich ist und schliesslich das Wägeresultat nicht vollständig korrigiert werden kann.

Ebenfalls festzustellen sind Nullpunktabweichungen bei Mikrowaagen, deren Kraftmesszelle vorwiegend nach dem Prinzip der elektromagnetischen Kraftkompensation arbeitet. Diese Waagen können eine Wägelast von 10g mit einer Messauflösung von 0.001 mg bestimmen, d.h. bis auf einen Zehnmillionstel genau. Es reichen deshalb schon kleinste Vibrationen aus der Umgebung, wie zum Beispiel durch Gebäudelifte verursacht, aus, um bei einer Mikrowaage eine Nullpunktabweichung hervorzurufen. Die Nullpunktabweichung äussert sich dadurch, dass der angezeigte Wert auf dem Display ansteigt und erst bei Beruhigung der Störeinflüsse sich allmählich wieder normalisiert. Bei Langzeitmessungen kann ein solcher Vorfall eine ganze Messreihe unbrauchbar machen.

Ein anderer Ansatz zur Verminderung des Einflusses von Schwingungen oder Vibrationen auf das Wägeresultat ist die Verwendung der Waage auf einem schweren Tisch oder Gestell mit Feder-Dämpfungssystem. Diese Methode wird bevorzugt an Aufstellungsorten bzw. Wägestellen für die Verwendung von Mikrowaagen angewendet. Auch diese Lösung generiert höhere Anschaffungskosten für eine Wägeplatzeinrichtung.

Lösungen gemäss dem Stand der Technik, bei welchen lediglich der Spulenstrom zur Berechnung des Wägeresultats verwendet wird, wie beispielsweise in der EP 0 359 978 A3 haben den Nachteil, dass zum Zeitpunkt der Berechnung des Wägeresultats mittels des Spulenstroms die Einspiellage, oder anders gesagt die Position für welche die Linearisierung des Wägeresultats mit dem gemessenen Spulenstrom übereinstimmt, erreicht sein muss. Dies hat zur Folge, dass bei Störungen, wie zum Beispiel Schwingungen oder Vibrationen, die Kraftmessvorrichtung immer wieder aus der exakten Einspiellage gebracht wird und es so zu Nullpunktabweichungen kommen kann.

In US 4,802,541 A wird gelehrt, dass basierend auf den Signalen eines Stromsensors, eines Spannungssensors, eines Temperatursensor, Kalibrierungskonstanten und einem Fehlersignal, der Gewichtsrechner das Gewicht bestimmt. Bis zum Erreichen eines stabil eingeschwungenen Zustandes stellt der Gewichtsrechner einen geschätzten Gewichtsausgabewert zur Verfügung. Der stabil eingeschwungene Zustand wird dabei mittels des Fehlersignals bestimmt. Der geschätzte sowie der finale Gewichtsausgabewert wird durch einen Strom/Gewicht- Algorithmus berechnet.

Als Schwingungen werden wiederholte, zeitliche Abweichungen von einem Mittelwert, auch Schwankungen genannt, von Zustandsgrößen des Systems bezeichnet. Vibrationen sind periodische, meist mittel- bis höherfrequente und niederamplitudige Schwingungen des Systems.

In US 2003/0229600 A1 ist ein Verfahren zum schnellen Wiegen von Gegenständen offenbart, bei welchem eine Plattform mit einer Lastzelle ein Ausgangssignal an einen Analog-Digitalwandler liefert. Das resultierende digitale Ausgangssignal wird durch einen Tiefpassfilter verarbeitet und durch einen Mikroprozessor analysiert, um Gewichte von Gegenständen auf der Plattform zu bestimmen. Die Glättung des gemessenen Spulenstroms durch geeignete elektronische Filter ist ein bekanntes Mittel um das zu berechnende Wägesignal zu stabilisieren. Nachteilig dabei ist, dass die Geschwindigkeit und Genauigkeit dieses Verfahren abhängig von den Filterparametern sind und sich meist gegenläufig zueinander verhalten, das heisst eine genaue Bestimmung des Wägeresultats erfordert mehr Zeit, und umgekehrt ist eine schnelle Bestimmung des Wägeresultats weniger genau.

Die Aufgabe der vorliegenden Erfindung liegt darin ein Verfahren zur Verfügung zu stellen, bei welchem das Wägeresultat schnell und gleichzeitig präzise ermittelt werden kann.

Zudem soll es durch das Verfahren möglich sein, in stark schwingender und/oder vibrierender Umgebung schnell ein präzises Wägeresultat zu erzielen.

Die Aufgaben werden erfindungsgemäss mit einem Verfahren zur Gewichtskraftbestimmung mittels einer nach dem elektromagnetischen Kraftkompensationsprinzip arbeitenden Kraftmessvorrichtung gemäss Anspruch 1 gelöst.

Das Verfahren zur Gewichtskraftbestimmung einer aufgelegten Last für eine nach dem elektromagnetischen Kraftkompensationsprinzip arbeitende Kraftmessvorrichtung umfassend einen Messaufnehmer, welcher eine in einem Magnetsystem und relativ zu diesem bewegliche Spule aufweist, welche von einem elektrischen Strom durchflossen werden kann, eine kraftübertragende mechanische Verbindung zwischen einem Lastaufnahmebereich und der Spule oder dem Magnetsystem, und einen die durch das Auflegen der Last auf den Lastaufnahmebereich verursachte Auslenkung der Spule aus ihrer Einspiellage in Bezug auf das Magnetsystem ermittelnden Positionssensor. Dabei dient der elektrische Strom durch die Spule dazu, die Spule und den mit der Spule oder dem Magnetsystem verbundenen Lastaufnahmebereich, durch die elektromagnetische Kraft zwischen der Spule und dem Magnetsystem, in die Einspiellage zurückzuführen und/oder dort zu halten. Zur Bestimmung der Gewichtskraft der aufgelegten Last werden die Grösse des elektrischen Stromes und die Grösse der Auslenkung der Spule aus ihrer Einspiellage verwendet.

Durch die Erfindung ist die Kraftmessvorrichtung in der Lage die Grösse der Auslenkung der Spule aus ihrer Einspiellage bzw. deren Position im Magnetsystem mit in die Berechnung des Anzeigewertes einfliessen zu lassen, da die Auslenkung der Spule aus ihrer Einspiellage zusätzlich der Verarbeitungseinheit zugeführt wird. So können auch Nichtlinearitäten wie zum Beispiel die Inhomogenität des Magnetsystems sowie Nichtlinearitäten der Positionsmessung, der Parallelführung, speziell der Biegelager bzw. der Federgelenke oder der Membranen, und bei vorhandenem Hebelsystem der Hebelübersetzung berücksichtigt werden.

Der Messaufnehmer kann auf verschiedene Arten in der Kraftmessvorrichtung angeordnet sein. Entweder ist die Spule am beweglichen Parallelschenkel und das Magnetsystem am feststehenden Parallelschenkel, oder die Spule am feststehenden Parallelschenkel und das Magnetsystem am beweglichen Parallelschenkel befestigt oder in Verbindung stehend. In beiden Fällen können sich die Spule und das Magnetsystem relativ zu einander bewegen. Der elektrische Strom durch die Spule, meist geregelt durch einen PID-Regler, bewirkt in beiden Fällen eine elektromagnetische Kraft zwischen der Spule und dem Magnetsystem, welche die Spule relativ zum Magnetsystem in ihre Einspiellage zurückführt und/oder dort hält wenn eine Last auf den Lastaufnahmebereich aufgelegt wird. Die Spule, welche im Magnetsystem beweglich angeordnet ist, kann durch eine oder mehrere Wicklungen ausgestaltet sein. Das Magnetsystem selbst kann ein Permanentmagnet oder ein stromdurchflossener Elektromagnet sein. Die gebräuchlichste Art ist es das Magnetsystem am feststehenden Bereich anzubringen und die Spule direkt oder gekoppelt über ein- oder mehrere Hebel am Lastaufnahmebereich. Dies ist meist deshalb sinnvoll, weil die geringere Massenträgheit, in diesem Fall die Massenträgheit der Spule, ein schnelleres Zurückführen in die bzw. ein stabileres Halten der Einspiellage ermöglicht. Es gibt aber auch Kraftmessvorrichtungen in denen das Magnetsystem als Permanentmagnet am beweglichen Teil angeordnet ist, um beispielsweise die Stromversorgung der Spule zu vereinfachen.

Die Einspiellage ist die Lage der Spule im Magnetsystem, in welcher ein Gleichgewicht zwischen allen auf das System wirkenden Kräften besteht. Bei Hebelsystemen entspricht dies ebenfalls einer Wägebalkenposition gleich null. Aufgrund der Verbindung der Spule mit dem Wägebalken ist eine Abweichung des Wägebalkens von der Einspiellage gleichbedeutend mit einer Auslenkung der Spule aus ihrer Einspiellage. Gleiches gilt wenn anstelle der Spule das Magnetsystem mit dem Wägebalken verbunden ist. Als Wägebalken wird im Sinne dieser Anmeldung jener ein- oder zweiseitige Hebel der kraftübertragenden Verbindung bezeichnet, an welchem der Positionssensor die Einspiellage überwacht. In bevorzugter Weise liegen die Drehachse des Wägebalkens, der Massenschwerpunkt des Wägebalkens, die Verbindung des ersten Hebelarms mit der Koppel, und der Krafterzeugungsmittelpunkt des Messaufnehmers, zusammen auf einer Ebene. Ist dies erfüllt, so ist der Wägebalken ohne aufgelegte Last momentfrei und unabhängig von einem schiefen Untergrund stets im Gleichgewicht. Die Ebene gebildet durch die oben genannten Punkte wird auch niveauneutrale Ebene genannt.

In einem Direktmesssystem ist die Spule oder das Magnetsystem des Messaufnehmers an einem Kraftübertragungsgestänge angebracht, welches direkt mit dem Lastaufnahmebereich verbunden ist, was bedeutet, dass keine Hebel zur Untersetzung der aufgebrachten Kraft vorhanden sind. Eine Auslenkung der Spule oder des Magnetsystems aus ihrer/dessen Einspiellage ist bei Direktmesssystemen gleichbedeutend mit einer Abweichung des Kraftübertragungsgestänges aus dessen Einspiellage.

Bevorzugt kommt ein solches erfinderisches Verfahren bei Mikrowaagen zur Anwendung, da es die Robustheit der Kraftmessvorrichtung gegenüber Schwingungen und/oder Vibrationen verbessert.

Das Verfahren eignet sich auch besonders für Kontrollwaagen, da es hier oft der Fall ist, dass das Wägeband der Kontrollwaage beim Zuführen und Abführen der zu verwiegenden Produkte in Schwingung versetzt wird und/oder dabei Vibrationen auftreten.

Die Erfindung eignet sich sowohl für Kraftmessvorrichtungen mit Messaufnehmer, welche nach dem Push-Prinzip, als auch solche, die nach dem Push-Pull-Prinzip die Kompensationskraft erzeugen. Ihr Unterschied liegt in der Erzeugung der Kompensationskraft: ein Push-System kann die Kompensationskraft in nur eine Richtung erzeugen, während ein Push-Pull-System in der Lage ist, eine Kompensationskraft in zwei entgegengesetzte Richtungen zu erzeugen.

Eine Weiterbildung der Erfindung sieht vor, dass die Grösse der Auslenkung der Spule aus ihrer Einspiellage mittels desjenigen Positionssensors ermittelt und quantifiziert wird, welcher einer Positionskontrolleinheit dazu dient den elektrischen Strom durch die Spule so zu regeln, dass die Spule und der mit der Spule oder dem Magnetsystem verbundene Lastaufnahmebereich durch die elektromagnetische Kraft zwischen der Spule und dem Magnetsystem in die Einspiellage zurückgeführt werden. Alternativ kann die die Grösse der Auslenkung der Spule aus ihrer Einspiellage auch mittels eines zusätzlichen Positionssensors ermittelt werden. Als einfachste Variante die Auslenkung der Spule aus ihrer Einspiellage zu ermitteln ist das Positionssignal des Positionssensors zu verwenden. Ebenfalls möglich sind aber auch zusätzliche Sensoren, welche dieselbe Information über die Wägebalkenposition bzw. über die Auslenkung der Spule aus ihrer Einspiellage innerhalb des Magnetsystems, bzw. des Wägebalkens gegenüber seiner Einspiellage beinhalten. Zum Beispiel könnte dieses Sensorsignal von einem Beschleunigungs-, Geschwindigkeits-, Winkelmess- oder Positionssensor bereitgestellt werden, um diese Information einer Verarbeitungseinheit zur Verfügung zu stellen.

Eine vorteilhafte Weiterbildung der Erfindung sieht vor, dass für die Bestimmung der Gewichtskraft der aufgelegten Last ein in einer Verarbeitungseinheit abgespeichertes Übertragungsmittel, welches als Rechenvorschrift einen Bezug der Grösse des Stromes und der Grösse der Auslenkung der Spule aus ihrer Einspiellage zur Gewichtskraftbestimmung herstellt, verwendet wird. Als Übertragungsmittel ist eine Rechenvorschrift zu verstehen, nach welcher die Verarbeitungseinheit die Ihr zur Verfügung stehenden Eingangsgrössen in einen Anzeigewert überträgt beziehungsweise den Wert der Gewichtskraft F' berechnet.

Eine Weiterbildung der Erfindung sieht vor, dass das Übertragungsmittel als eine Übertragungstabelle mit zur Grösse der Auslenkung der Spule aus ihrer Einspiellage und zur Grösse der Stromstärke zugehörigen Werten der Gewichtskraft der aufgelegten Last abgespeichert ist. Eine weitere Möglichkeit ist, das Übertragungsmittel als eine Übertragungsfunktion mit mindestens einem Parameter und mit mindestens der Grösse der Auslenkung der Spule aus ihrer Einspiellage und der Grösse der Stromstärke als Eingangsgrössen abzuspeichern.

Mit einer Übertragungstabelle als Rechenvorschrift wird der entsprechende Anzeigewert aus einer Tabelle, welche Werte in Abhängigkeit der Grösse der Auslenkung der Spule aus ihrer Einspiellage und der Grösse der Stromstärke aufweist, gewählt. Als Übertragungsfunktion ist eine mathematische Funktion mit mindestens zwei Eingangsgrössen und mindestens einem Parameter zu verstehen. Der mindestens eine Parameter der Übertragungsfunktion ist im Kontext der Erfindung als Variable einer mathematischen Funktion zu verstehen, welche die Abhängigkeit zwischen der Grösse der Auslenkung der Spule aus ihrer Einspiellage und der Grösse des elektrischen Stromes beschreibt.

Eine weitere Ausgestaltung der Erfindung sieht vor, dass der mindestens eine Parameter der Übertragungsfunktion als eine Parametertabelle und/oder als eine Systemkennlinie abgespeichert ist. Auch hier wird aus einer Parametertabelle der entsprechende Parameter in Abhängigkeit der Grösse der Auslenkung der Spule und der Grösse der Stromstärke gewählt, oder im Falle der Systemkennlinie als Parameter, welcher die Systemkennlinie beschreibt.

Eine andere vorteilhafte Weiterbildung der Erfindung sieht vor, dass der mindestens eine Parameter der Übertragungsfunktion lastabhängig ist.

Eine vorteilhafte Weiterbildung der Erfindung sieht vor, dass die Ermittlung der Werte der Übertragungstabelle und/oder die Ermittlung des mindestens einen Parameters der Übertragungsfunktion durch Variieren der Auslenkung der Spule und im Wesentlichen zeitgleichem Messen der zur Auslenkung der Spule zugehörigen Grösse des elektrischen Stromes erfolgt, und/oder durch Variieren der Grösse des elektrischen Stromes und im Wesentlichen zeitgleichem Messen der zur Grösse des elektrischen Stromes zugehörigen Auslenkung der Spule erfolgt, und/oder durch Analyse der Auslenkung der Spule in Bezug auf die Grösse des elektrischen Stromes bei Vibrationen erfolgt.

Besonders bevorzugt findet die Ermittlung der Werte der Übertragungstabelle und/oder des mindestens einen Parameters der Übertragungsfunktion durch Analyse bei Vibration bei Kontrollwaagen Anwendung.

Ein anderer Aspekt der Erfindung sieht vor, dass die Ermittlung der Werte der Übertragungstabelle und/oder die Ermittlung des mindestens einen Parameters der Übertragungsfunktion jeweils ohne und mit einem den Lastaufnahmebereich beaufschlagenden Gewicht durchgeführt wird, wobei es sich bei dem Gewicht um ein extern aufgelegtes oder ein intern mittels einer Vorrichtung aufgelegtes Gewicht handeln kann. Die Ermittlung der Werte und/oder des mindestens einen Parameters unter verschiedenen Lastbedingungen verbessert die Genauigkeit des Ausgabewertes über den gesamten Wägebereich der gravimetrischen Kraftmessvorrichtung.

Eine besonders vorteilhafte Weiterbildung der Erfindung sieht vor, dass das Übertragungsmittel für jede Kraftmessvorrichtung individuell oder für denselben Typ einer Kraftmessvorrichtung generisch erstellt wird. Es ist offensichtlich, dass jede Kraftmessvorrichtung, geprägt durch die individuellen Fertigungstoleranzen am Magnetsystem, an den Biegelagern, an der Positionsmessung und der Hebelübersetzung, eigene Werte und/oder Parameter aufweist, welche dann nur für die eine Kraftmessvorrichtung gelten. Um in der Produktion der Kraftmessvorrichtungen die Ermittlung dieser Werte und/oder Parameter zu beschleunigen, kann ein Übertragungsmittel in der Verarbeitungseinheit abgespeichert werden, welches generisch aus dem arithmetischen Mittel von vorherig bestimmten Übertragungsmitteln erstellt wurde.

Eine Kraftmesszelle für eine gravimetrische Kraftmessvorrichtung zur Gewichtskraftbestimmung nach dem elektromagnetischen Kraftkompensationsprinzip mit einer kraftübertragenden mechanischen Verbindung zwischen einem Messaufnehmer, umfassend eine in einem Magnetsystem beweglichen Spule und einem Lastaufnahmebereich, wobei entweder die Spule oder das Magnetsystem mit dem Lastaufnahmebereich in Verbindung steht, zeichnet sich dadurch aus, dass die Kraftmesszelle einen durch das Auflegen einer Last auf den Lastaufnahmebereich verursachte Auslenkung der Spule aus ihrer Einspiellage ermittelnden Positionssensor aufweist, mittels welchem die Grösse der Auslenkung der Spule aus ihrer Einspiellage bestimmt werden kann, wobei die Grösse der Auslenkung der Spule aus ihrer Einspiellage in einem Verfahren zur Gewichtskraftbestimmung verwendet werden kann.

In einem computergestütztem Programm zur Ausführung des Verfahrens zur Gewichtskraftbestimmung mittels einer nach dem elektromagnetischen Kraftkompensationsprinzip arbeitenden gravimetrischen Kraftmessvorrichtung wird ein Anzeigewert der Gewichtskraft der aufgelegten Last zur Ausgabe gebracht. Die Kraftmessvorrichtung weist dabei eine in einem Magnetsystem bewegliche Spule auf, welche mit einem elektrischen Strom durchflossen werden kann, der dazu dient die Spule und den mit der Spule oder dem Magnetsystem verbundene Lastaufnahmebereich, durch die elektromagnetische Kraft zwischen der Spule und dem Magnetsystem, in die Einspiellage zurückzuführen und/oder dort zu halten, sowie eine kraftübertragende mechanische Verbindung zwischen der Spule und einem Lastaufnahmebereich, und einen die durch das Auflegen der Last auf den Lastaufnahmebereich verursachte Auslenkung der Spule aus einer ihrer Einspiellage ermittelnden Sensor. Als Eingangsgrössen des computergestützten Programms werden mindestens die Grösse des elektrischen Stromes und die Grösse der Auslenkung der Spule aus ihrer Einspiellage verwendet.

Eine bevorzugte Ausführungsform des computergestützten Programms verwendet zusätzlich ein Zeitsignal und mindestens ein Temperatursignal als Eingangsgrössen. Damit wird sichergestellt, dass auch Temperatureinflüsse auf das Magnetfeld des Magnetsystems und/oder die durch Wärmedehnung veränderte Hebelübersetzung und/oder veränderte Rückstellkräfte der Biegelager berücksichtigt werden. Ein Zeitsignal dient dazu, dynamische Effekte beim Einschalten oder einem Lastwechsel zu kompensieren, oder zeitabhängige Kompensationen durchzuführen.

Eine Weiterbildung des computergestützten Programms sieht vor, dass das computergestützte Programm auf ein Übertragungsmittel zugreift. Das Übertragungsmittel kann dabei im Arbeitsspeicher der programmausführenden Einheit abgespeichert sein.

In einer Anwendung des computergestützten Programms in einem Kontrollwaagensystem zur Verwiegung von Wägegüter mit einem Zuführband zum Zuführen der Wägegüter, einem Abführband zum Abführen der Wägegüter und einem mit einer Kraftmessvorrichtung verbundenen Wägeband, erfolgt die Bestimmung der Gewichtskraft in einem Terminal mittels eines computergestützten Programms.

Im Folgenden wird der Erfindungsgegenstand anhand von bevorzugten Ausführungsbeispielen, welche in den beiliegenden Zeichnungen dargestellt sind erläutert. Es zeigen:

Fig. 1 Eine schematische Schnittdarstellung einer Kraftmesszelle einer oberschaligen Kraftmessvorrichtung als Hebelsystem in der Seitenansicht;

Fig. 2 Eine Kraftmesszelle als Direktmesssystem;

Fig. 3 Ein Blockdiagramm mit dessen Hilfe der Funktionsablauf einer erfindungsgemässen Kraftmessvorrichtung beschrieben wird;

Fig. 4 Ein Positions-Strom-Diagramm, über den gesamten Auslenkungsbereich der Spule, mit Übertragungsfunktion A und Übertragungsfunktion $B_i$;

Fig. 5 Ein Positions-Strom-Diagramm, über den gesamten Auslenkungsbereich der Spule, mit Übertragungsfunktion A und den Übertragungsfunktionen $B_1$, $B_2$ und $B_3$;

Fig. 6 Ein Positions-Strom-Diagramm, über einen Ausschnitt des Auslenkungsbereiches im Bereich der Einspiellage, mit Übertragungsfunktion A und Übertragungsfunktion $B_i$ bei schwingender Spule;

Fig. 7 Ein Diagramm zum Vergleich der Nullpunktabweichungen einer Kraftmessvorrichtung mit einem Wägebereich von 0 - 400g bei Schwingungen zwischen einem Verfahren nach Stand der Technik und dem erfindungsgemässen Verfahren bei Nulllast;

Fig. 8 Ein Diagramm zum Vergleich der Nullpunktabweichungen einer Kraftmessvorrichtung mit einem Wägebereich von 0 - 400g bei Schwingungen zwischen einem Verfahren nach Stand der Technik und dem erfindungsgemässen Verfahren bei 400g, und;

Fig. 9 Ein Diagramm zum Vergleich der schnelleren Gewichtskraftbestimmung in Kraftmessvorrichtungen von dynamischen Kontrollwaagen zwischen einem Verfahren nach Stand der Technik und dem erfindungsgemässen Verfahren.

Merkmale mit gleicher Funktion und ähnlicher Ausgestaltung sind in der folgenden Beschreibung mit denselben Bezugszeichen versehen.

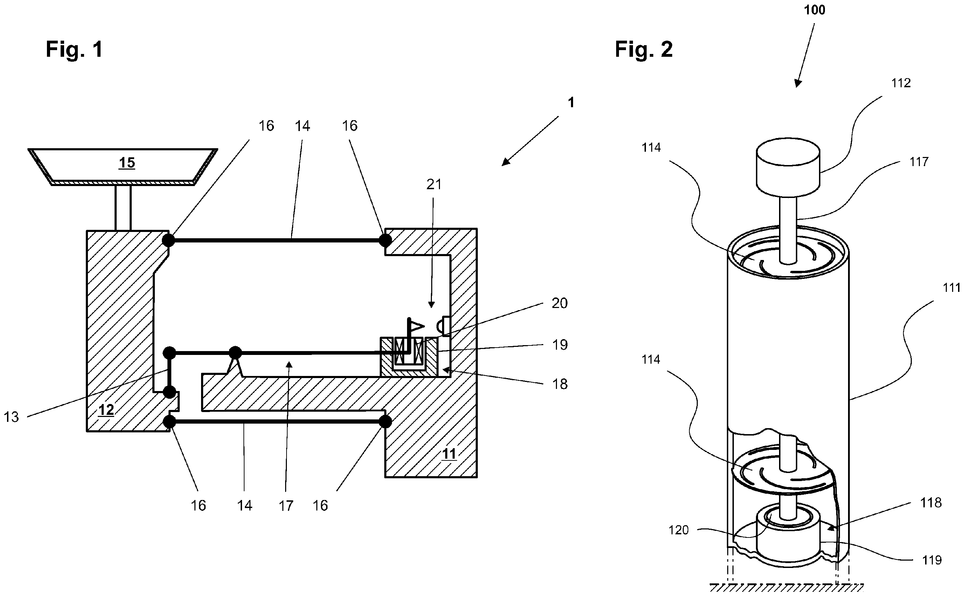

Figur 1 zeigt eine schematische Darstellung einer Kraftmesszelle einer Kraftmessvorrichtung 1 von der Seite in einer Schnittdarstellung. Über den feststehenden Bereich 11 ist die Kraftmessvorrichtung 1 auf einer Unterlage abgestützt. Auf den Lastaufnahmebereich 12, welcher durch zwei Parallelführungen 14 mit dem feststehenden Bereich 11 verbunden ist, wird die zu messende Last über eine Schale 15 aufgelegt. Die Parallelführungen 14 sind jeweils durch Biegegelenke 16 mit dem Lastaufnahmebereich 12, beziehungsweise mit dem feststehenden Bereich 11 verbunden. Biegegelenke 16 definieren eine Drehachse und verhalten sich quer zur Drehachse als ein praktisch starres Kraftübertragungselement. Die hier gezeigte Variante als oberschalige Ausführung ist nicht zwingend. Die Kraftmessvorrichtung 1 kann ebenso als unterschalig, meist ein Gehänge aufweisend, ausgeführt werden. Die Koppel 13 überträgt die Gewichtskraft auf den ersten Hebelarm des Wägebalkens 17, welcher an einer Lagerstelle gelagert ist. Am anderen Ende des Wägebalkens 17, dem zweiten Hebelarm, ist an seinem äusseren Ende der Messaufnehmer 18 positioniert, welcher die untersetzte Gewichtskraft mit einer Kompensationskraft 25 kompensiert. Der hier dargestellte Messaufnehmer 18 ist als eine in einem Magnetsystem 19 beweglich gelagerte stromdurchflossene Spule 20 gezeigt. Entspricht die erzeugte Kompensationskraft 25 des Messaufnehmers 18 am zweiten Hebelarm der Gewichtskraft der Last am ersten Hebelarm so ist der Wägebalken 17 im Gleichgewicht und somit in der Einspiellage. Diese Einspiellage wird überwacht durch einen Positionssensor 21.

Durch Auflegen einer Masse bzw. Aufbringen einer Kraft auf die Schale 15 senkt sich der Lastaufnahmebereich 12, parallel zum feststehenden Bereich 11 durch die Parallelführungen 14 geführt, ab. Über die Koppel 13 mit dem Lastaufnahmebereich 12 verbunden, überträgt der Wägebalken 17 diese Bewegung mit einer definierten Übersetzung an das andere, dem Messumformer 18 zugewandten Ende des Wägebalkens 17. Mittels des Positionssensors 21 wird ein Positionssignal 22 entsprechend der Auslenkung ders Spule 20 aus der Einspiellage ermittelt. Dieses Positionssignal 22 ist das Eingangssignal für die Positionskontrolleinheit 23, welche einen elektrischen Strom 24 regelt und durch die Spule 20 treibt, so dass die resultierende Kompensationskraft 25 die Spule 20 und den mit der Spule 20 verbundene Wägebalken 17 wieder in die Einspiellage zurückführt. Im eingeregelten Zustand (Spule 20 befindet sich wieder in der Einspiellage) ist die Stärke des Spulenstroms 24 ein Mass für die zu bestimmende, aufgelegte Masse bzw.

aufgebrachte Kraft am Lastaufnahmebereich 12. Die Stromstärke 24 wird gemessen, mittels einer Verarbeitungseinheit 26 der Anzeigewert 27 berechnet, und danach auf einem Display zur Anzeige gebracht.

Figur 2 zeigt eine mögliche Ausgestaltung einer Kraftmesszelle 100 als Direktmesssystem. Der feststehende Parallelschenkel 111 ist auf dem Untergrund abgestützt. Der bewegliche Parallelschenkel 112, welcher zur Lastaufnahme dient ist mit einem Kraftübertragungsgestänge 117 verbunden und wird durch Parallelführungen 114, hier in Figur 2 als Membran ausgestaltet, geführt. In dieser Ausführung ist der Messaufnehmer 118 am unteren Ende des Kraftübertragungsgestänges 117 angeordnet, wobei hier die Spule mit dem beweglichen Parallelschenkel 112 in Verbindung steht und das Magnetsystem 119 am feststehenden Parallelschenkel 111 angeordnet ist. Weitere Ausgestaltungen wären möglich durch Anbringen des Messaufnehmers 118 im Bereich zwischen den Parallelführungen 114 und/oder durch ein vertauschtes Anordnen von Magnetsystem 119 und Spule 120.

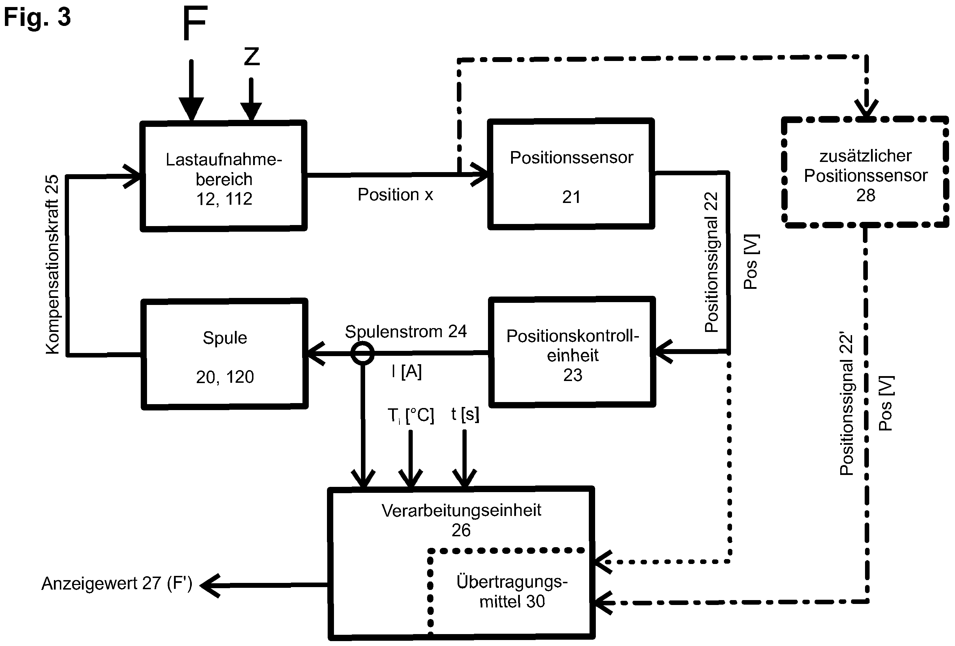

Als Blockdiagramm zeigt Figur 3 den Funktionsablauf einer Kraftmessvorrichtung nach Stand der Technik und einer erfindungsgemässen Kraftmessvorrichtung 1. Eine auf die Schale 15 aufgelegte Last übt eine Kraft F auf den Lastaufnahmebereich 12, 112 aus. Der Wägebalken 17 und die mit dem Wägebalken 17 verbundene Spule 20 oder das mit dem Wägebalken 17 verbundene Magnetsystem 19, bzw. das Kraftübertragungsgestänge 117 und die mit dem Kraftübertragungsgestänge 117 verbundene Spule 120 oder das mit dem Kraftübertragungsgestänge 117 verbundene Magnetsystem 119 werden aus deren Einspiellage ausgelenkt, das heisst sie nehmen eine andere Position ein. Die neue Position x wird vom Positionssensor 21 ermittelt und als Positionssignal 22 an die Positionskontrolleinheit 23 weitergeleitet. Anhand des Positionssignals 22 bestimmt die Positionskontrolleinheit 23, meist einen PID-Regler aufweisend, ständig den für die Rückführung des Systems in die Einspiellage nötigen Spulenstrom 24. Durch den Spulenstrom 24 bildet die Spule 20, 120 ein magnetisches Feld und erzeugt im Magnetsystem 19, 119 eine Kompensationskraft 25, welche den Wägebalken 17 bzw. das Kraftübertragungsgestänge 117 zurück in die Einspiellage bringt. Der ganze Ablauf wiederholt sich ständig im Sinne einer Regelung bzw. eines Haltens des Systems in der Einspiellage. Dieser Regelkreis erfasst die Auslenkung des Wägebalkens 17 bzw. des Kraftübertragungsgestänge 117 also dynamisch, das heisst mehrmals pro Sekunde, z.B. im Bereich von 500Hz - 10kHz.

Da der Spulenstrom 24 ein direktes Mass für die Kompensationskraft 25 ist, wird der Spulenstrom 24 gemessen und daraus die Gewichtskraft der aufgelegten Last als Anzeigewert 27 von der Verarbeitungseinheit 26 berechnet. Zur Berechnung des Anzeigewertes 27 bezieht die Verarbeitungseinheit 26 auch Zusatzfaktoren mit ein, wie zum Beispiel die Umgebungs- und Magnettemperatur sowie zeitabhängige dynamische Effekte.

In Kraftmessvorrichtungen 1 gemäss dem Stand der Technik erfolgt die Berechnung des Anzeigewertes 27 nach einer Formel der Funktion:

$$F = f(I, T, t),$$

wobei der Spulenstrom 24 und Temperatureinflüsse als veränderliche Parameter in die Berechnung einfliessen. Um dynamische Effekte beim Einschalten oder einem Lastwechsel zu kompensieren werden im Weiteren auch zeitabhängige Kompensationen durchgeführt. In einer spezifischen Übertragungsfunktion wird dies mittels Konstanten für diesen Kraftmesszellentyp berücksichtigt. Diese Konstanten beinhalten unter Anderem das Übersetzungsverhältnis des Wägebalkens 17, mit welchem die von der Spule 20 erzeugte Kompensationskraft 25 in die auf den Lastaufnahmebereich 12 aufgebrachte Gewichtskraft bzw. die aufgelegte Masse umgerechnet wird. Um nicht nur dann einen Anzeigewert 27 auf dem Display anzuzeigen wenn sich der Wägebalken 17 bzw. das Kraftübertragungsgestänge 117 exakt in der Einspiellage befindet, sondern ständig einen Anzeigewert 27 anzuzeigen, wird bei Kraftmesseinrichtungen nach Stand der Technik der Anzeigewert 27 elektronisch gefiltert, d.h. es wird mittels der Übertragungsfunktion ein zeitabhängiger Mittelwert gebildet. Die Regelung des Spulenstroms erfolgt durch eine Positionskontrolleinheit erfolgt nach folgender Funktion,

$$I = f(F, z, T, t)$$

und berücksichtigt neben Temperatureinflüssen (T) und dynamischen Effekten (t) auch etwaige Störgrössen z.

Einige Konstanten der Übertragungsfunktion werden nach der Montage der Kraftmessvorrichtung 1 in der Verarbeitungseinheit 26 abgespeichert und gelten daher nur für den eingeregelten Zustand in der Einspiellage der Spule 20, 120, da, wie einleitend erwähnt, das Magnetfeld des Magnetsystems 19, 119 nicht vollständig homogen ist oder die Positionsmessung, die Biegelager 16 bzw. die Federgelenke oder die Membranen, oder die Hebelübersetzung Nichtlinearitäten aufweisen können.

Ist eine Kraftmessvorrichtung 1 Vibrationen, Schwingungen oder sonstigen Störeinflüssen ausgesetzt, ist die Berechnung des dem Gewichtswert einer aufgelegten Last entsprechenden Anzeigewertes 27 allein anhand der Stärke des Spulenstroms 24 fehlerbehaftet, da die Verwendung der für die exakte Einspiellage der Spule 20, 120 kalibrierten Konstanten der Übertragungsfunktion nicht mehr exakt anwendbar sind. Die Berechnung der Gewichtskraft F' aus der Stärke des Spulenstroms 24 zum Zeitpunkt, in welcher sich die Spule 20, 120 nicht in der Einspiellage befindet weicht somit von der tatsächlichen Gewichtskraft F der aufgelegten Last ab.

Das erfindungsgemässe Verfahren zur Gewichtskraftbestimmung zeichnet sich dadurch aus, dass die Verarbeitungseinheit 26 zusätzlich das Positionssignal 22 des Positionssensors 21, also die Grösse der Auslenkung der Spule 20, 120 aus deren Einspiellage zur Berechnung des dem Gewichtswert der aufgelegten Last entsprechenden Anzeigewertes 27 verwendet. Um einen Bezug der Grösse des elektrischen Stromes 24 und der Grösse der Auslenkung der Spule 20, 120 aus ihrer Einspiellage zur Gewichtskraftbestimmung herzustellen, ist in der Verarbeitungseinheit 26 ein Übertragungsmittel 30 als Rechenvorschrift abgespeichert. Dies ist in Figur 3 durch die gestrichelten Linien dargestellt. Ebenfalls möglich anstelle des Positionssignals 22 sind Eingangssignale an die Verarbeitungseinheit 26, welche dieselbe Information über die Position x bzw. über die Position der Spule 20, 120 innerhalb des Magnetsystems 19, 119 beinhalten. In Figur 3 ist dies durch den strichpunktierten Pfad dargestellt. Zum Beispiel könnte ein zweiter zusätzlicher Sensor 28, z.B. ein Beschleunigungs-, Geschwindigkeits-, Winkelmess- oder Positionssensor, diese Information an die Verarbeitungseinheit 26 liefern. Die Berechnung des Anzeigewertes 27 nach erfinderischem Verfahren erfolgt demnach nach der Formel:

$$ F = f(x, I, T, t), $$

wobei auch hier die Temperatur T und der zeitliche Verlauf der Anzeigewertberechnung einen Einfluss auf den Anzeigewert 27 haben. Die Kraftmessvorrichtung 1 ist so in der Lage die Auslenkung der Spule 20, 120 aus ihrer Einspiellage mit in die Berechnung des Anzeigewertes 27 einfliessen zu lassen, und so auch Nichtlinearitäten wie zum Beispiel die Inhomogenität des Magnetsystems 19, 119 sowie Nichtlinearitäten der Positionsmessung, an den Parallelführungen 14, 114 speziell der Biegelager 16 bzw. der Federgelenke oder den Membranen, und der Hebelübersetzung zu berücksichtigen. Die Verbesserung betrifft nicht die Positionsregelung durch die Positionskontrolleinheit 23, sondern die quantitative Grösse des Positionssignals 22, 22', die in die Berechnung des Anzeigewertes 27 miteinbezogen wird.

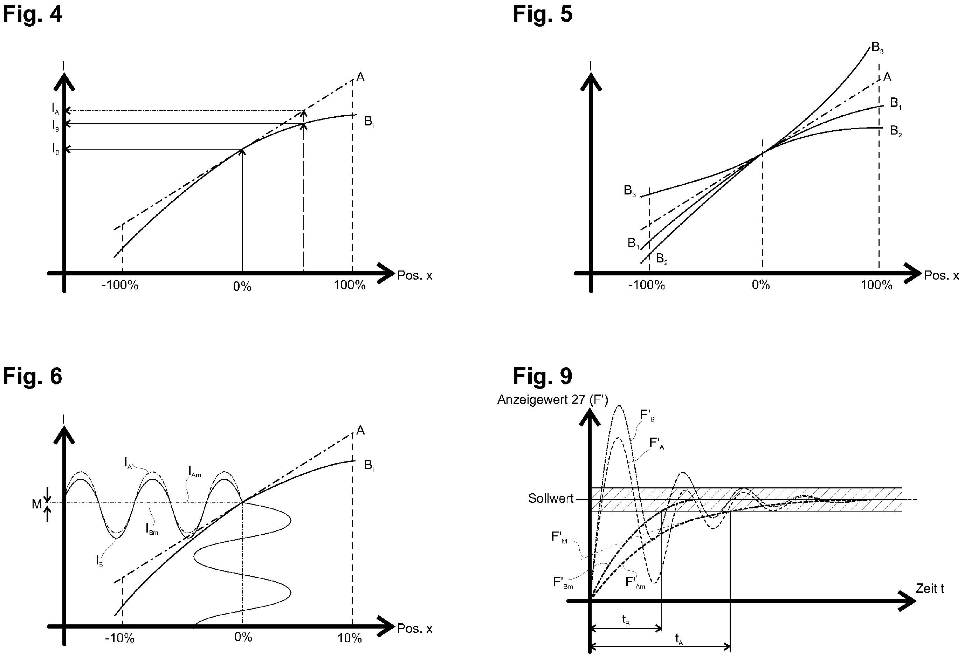

In den Figuren 4 bis 6 werden anhand von Position-Strom-Diagrammen verschiedene Systemkennlinien von Kraftmessvorrichtungen 1 und deren Auswirkungen auf die Berechnung des Anzeigewertes 27 in der Verarbeitungseinheit 26 gezeigt. Die Diagramme zeigen jeweils eine Systemkennlinie A einer idealisierten Kraftmessvorrichtung 1 mit idealem Verhalten der Biegelager 16 bzw. der Federgelenke, und des Magnetsystems 19, 119 und mindestens einer Systemkennlinie $B_i$ mit idealem Verhalten der Biegelager 16 bzw. der Federgelenke und realem Verhalten des Magnetsystems 19, 119. Die Markierungen 100% und - 100% bzw. 10% und -10% auf der horizontalen Achse definieren die Auslenkungsposition der Spule 20, 120 im Magnetsystem 19, 119.

In Figur 4 ist die Systemkennlinie A als Gerade eingezeichnet, was bedeutet, dass unter Idealbedingungen eine Auslenkung der Spule 20, 120 aus ihrer Einspiellage linear in eine Änderung der Stromstärke 24 übertragen wird. Im Gegensatz zur Systemkennlinie A ist bei der Systemkennlinie $B_i$ das reale Verhalten, die oben erwähnte Inhomogenität des Magnetsystems 19, 119 berücksichtigt. Wird nun eine Kraft F auf den Lastaufnahmebereich 12, 112 aufgebracht ändert sich die Position x worauf die Positionskontrolleinheit 23 ein Positionssignal 22 vom Positionssensor 21 erhält. Anhand des gemessenen Spulenstroms $I_A$ berechnet die Verarbeitungseinheit 26 den Anzeigewert 27, wie in Figur 4 durch die gestrichelten Pfeile gezeigt. Befindet sich die Spule 20, 120, nach erfolgter Einregelung, in der Einspiellage, entspricht die momentan gemessene Stromstärke des Spulenstroms $I_0$ proportional der aufgebrachten Kraft F.

Wie oben erwähnt ist die Kennlinie A ungenügend realitätsnah, d.h. sie repräsentiert das reale Verhalten nur ungenau. Durch die Inhomogenität des Magnetsystems 19, 119 und nichtlinearen Rückstellkräften der Biegelager 16 bzw. def Federgelenke ist eine Übertragungsfunktion von mindestens zweiter Ordnung nötig, in Figur 4 durch die Systemkennlinie $B_i$ dargestellt, um das tatsächliche Verhalten abzubilden. Somit sollte die Verarbeitungseinheit 26 für das Positionssignal 22, 22' in Wirklichkeit einen dem Spulenstrom $I_B$ entsprechenden Anzeigewert 27 berechnen. Um die Einspiellage herum ist der Fehler zwischen der Systemkennlinie A und der Systemkennlinie $B_i$ kleiner, da die Systemkennlinien auf das Verhalten des Magnetsystems 19, 119 um die Einspiellage herum abgestimmt werden. Als Folge der Verwendung einer Kennlinie A würde die Verarbeitungseinheit 26 mit einem falschen Stromsignal zur Anzeigewertberechnung beliefert.

Um diesen Effekt für die Anzeigewertberechnung zu korrigieren verwendet die Verarbeitungseinheit 26 erfindungsgemäss zusätzlich zur Stärke des Spulenstroms 24 das Positionssignal 22 des Positionssensors 21 (oder das Positionssignal 22' des Positionssensors 28) und ein in einem internen Speicher der Verarbeitungseinheit 26 abgespeichertes Übertragungsmittel 30. Das Übertragungsmittel 30 kann zum Beispiel in Form einer Übertragungsfunktion oder einer Übertragungsstabelle vorhanden sein. Das bedeutet, dass das erfindungsgemässe Übertragungsmittel 30 die Werte des eingangs erwähnten Übertragungsfaktors k für eine Mehrzahl von Positionen x innerhalb des gesamten Auslenkungsbereichs des Wägebalkens 17 bzw. des Kraftübertragungsgestänges 117 beinhaltet. Die Verarbeitungseinheit 26 wählt bei der Berechnung des Anzeigewertes 27 sozusagen den Übertragungsfaktor in Abhängigkeit des der Verarbeitungseinheit 26 zur Verfügung gestellten Positionssignals 22, 22' und der aufgelegten Last aus. Anders ausgedrückt ist das Übertragungsmittel 30 eine Rechenvorschrift, welche unter anderem abhängig von der Position x ist, und so einen Bezug zwischen der Grösse der Auslenkung der Spule 20, 120 aus ihrer Einspiellage und der Grösse des Spulenstroms 24 herstellt.

Es hat sich gezeigt, dass ein solches Übertragungsmittel 30 von der Masse der aufgelegten Last abhängig ist, d.h. die Parameter des Übertragungsmittels 30 gelten für eine bestimmte aufgelegte Last. In Figur 5 ist dies mit unterschiedlichen Übertragungsfunktionen $B_1$, $B_2$ und $B_3$ dargestellt. Je stärker die zugehörige auf den Lastaufnehmer 12, 112 aufgebrachte Kraft ist, umso grösser ist die Biegung einer Übertragungsfunktion $B_i$. Die Übertragungsfunktion $B_3$ weist eine nach oben gebogene Kennlinie auf. Diese entsteht bei Änderung der Kraftrichtung des Messaufnehmers 18, 118 wie dies zum Beispiel bei Push-Pull-Systemen auftritt. Das Übertragungsmittel 30 beinhaltet deshalb mindestens eine Übertragungsfunktion mit den entsprechenden Parametern welche dann zur Bestimmung des Anzeigewertes 27 herangezogen wird wenn die Übertragungsfunktion der aufgebrachten Kraft am besten entspricht, oder es werden die entsprechenden Parameter zwischen zwei Übertragungsfunktionen interpoliert.

In Figur 6 werden die Auswirkungen von Schwingungen und/oder Vibrationen um die Einspiellage herum aufgezeigt. Dazu wurde der Ausschnitt um die Einspiellage herum vergrössert, so dass die X-Achse lediglich von -10% bis 10% der Position x zeigt. Die Schwingung des Positionssignals 22, 22' ist angenähert als bezüglich der Einspiellage symmetrischer Sinus dargestellt. Bei einer mit der Systemkennlinie A idealisierte Kraftmessvorrichtung 1 resultiert ein Strom $I_A$ mit dem Mittelwert $I_{Am}$. Bei realem Verhalten entsprechend der Systemkennlinie $B_i$, wird das Schwingungssignal der Position x in ein Signal des Spulenstroms $I_B$ übertragen. Dieses der Realität entsprechende Stromsignal $I_B$ ist ein asymmetrisch verzerrtes Signal, welches durch die Übertragungsfunktion transformiert worden ist, und wodurch eine Mittelwertabweichung M des Stromes $I_B$ gegenüber $I_A$ entsteht.

Im Vergleich der beiden Mittelwerte der Stromstärken $I_A$ und $I_B$ zeigt sich eine Mittelwertabweichung M, wodurch auch der Anzeigewert 27 ohne das erfinderische Verfahren ebenfalls eine Abweichung erhalten würde. Diese Abweichung M ist zusätzlich in Figur 6 auf der Stromachse durch die zwei aufeinander gerichteten Pfeile gekennzeichnet.

Damit die Verarbeitungseinheit 26 den Anzeigewert 27 nach realem Verhalten berechnen kann ist in deren Speicher ein Übertragungsmittel 30 abgespeichert. Das Übertragungsmittel 30 beschreibt die Berechnungsvorschrift für den Anzeigewert 27, unter anderem mit der Position x und der Stromstärke 24 als Eingangsgrössen sowie mit Parametern, und kann wie schon erwähnt zum Beispiel in Form einer Übertragungsfunktion oder einer Übertragungstabelle ausgebildet sein.

Im Folgenden werden Möglichkeiten zur Ermittlung der Werte und/oder der Parameter eines Übertragungsmittels 30 aufgezeigt. Die Ermittlung der Werte und/oder der Parameter des Übertragungsmittels 30 wird vorteilhafterweise während der Produktion der Kraftmessvorrichtung 1, insbesondere während der Justierungsphase durchgeführt. Es kann für jede einzelne Kraftmessvorrichtung 1 ein individuelles Übertragungsmittel 30, oder für ein und denselben Typ einer Kraftmessvorrichtung 1 ein generisches Übertragungsmittel 30 ermittelt werden. Bei diesem generisch ermittelten Übertragungsmittel 30 wird aus mehreren, vorgängig ermittelten Übertragungsmitteln 30 ein Mittelwert bestimmt, welcher dann für alle Kraftmessvorrichtungen 1 desselben Typs verwendet werden kann. Das Übertragungsmittel 30 kann aber auch am Aufstellungsort des Gerätes beim Kunden ermittelt werden. Dazu ist nur ein geringer Zeitaufwand nötig um das nachfolgend beschriebene Verfahren durchzuführen.

Unter einer Kalibrierung wird das Feststellen einer Abweichung zwischen dem Messwert und dem wahren Wert der Messgrösse bei vorgegebenen Messbedingungen, ohne eine Veränderung vorzunehmen verstanden. Wird hingegen eine Veränderung vorgenommen spricht man von einer Justierung. Zum Beispiel bei einer Waage wird bei einer Justierung durch Feineinstellen ihrer Funktionen mit den dafür vorgesehenen Teilen durch geschultes Fachpersonal (manuell), oder durch den Anwender halbautomatisch, wobei dazu ein externes oder in der Waage eingebautes Referenzgewicht aufgelegt wird, oder automatisch, falls die Waage einen Justiermechanismus mit Referenzgewicht besitzt, die Veränderung ausgeglichen.

Als eine erste Möglichkeit erfolgt die Ermittlung der Werte und/oder der Parameter der Übertragungsfunktion 30 durch Variieren der Auslenkung der Spule 20, 120 und im Wesentlichen zeitgleichem Messen der zur Auslenkung der Spule 20, 120 zugehörigen Grösse des elektrischen Stromes 24. Alternativ kann als zweite Möglichkeit die Ermittlung der Werte und/oder der Parameter durch Variieren der Grösse des elektrischen Stromes 24 und im Wesentlichen zeitgleichem Messen der zur Grösse des elektrischen Stromes 24 zugehörigen Auslenkung der Spule 20, 120 erfolgen.

Als dritte Möglichkeit die Werte und/oder die Parameter des Übertragungsmittels 30 zu bestimmen wird bei Vibrationen die Auslenkung der Spule 20, 120 in Bezug auf die Grösse des elektrischen Stromes 24 analysiert. Dies kann auf einem speziell dafür vorgesehenem Schwingungstisch während der Kalibrierungsphase geschehen oder auch am Aufstellungsort während des Betriebs der Kraftmessvorrichtung 1. Dieses dritte Verfahren zur Ermittlung der Werte und/oder der Parameter findet bevorzugt bei Kontrollwaagen Anwendung.

Sofern die Kraftmessvorrichtung 1 ein internes mit dem Lastaufnahmebereich 12, 112 verbundenes Kalibriergewicht aufweist, welches bei Bedarf einer Kalibrierung zugeschaltet werden kann, kann die Kraftmessvorrichtung 1 einsatzspezifisch eine oder mehrere der oben erwähnten Möglichkeiten zur Ermittlung der Parameter menügesteuert oder autonom durchführen.

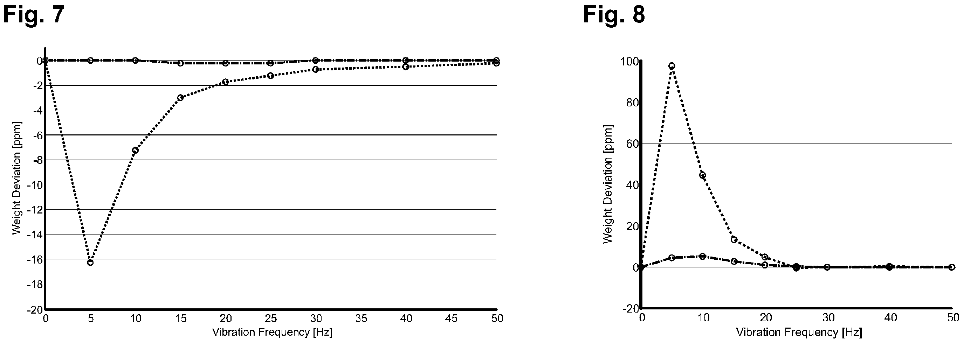

Die Grafik der Figuren 7 und 8 zeigen die Verbesserung des Anzeigewertes 27 durch das erfindungsgemässe Verfahren (strich-punktierte Linie) gegenüber einer Hebelsystem- Kraftmessvorrichtung nach Stand der Technik (gepunktete Linie) für eine bis zu einer Beschleunigungsamplitude von 20mg (g steht hier für die Erdbeschleunigung) schwingenden Waage. Diese Verbesserung des Anzeigewertes 27 wird auch Robustheit genannt. Auf der horizontalen Achse ist jeweils die Anregungsfrequenz in Hertz [Hz], und auf der vertikalen Achse die Abweichung des Anzeigewertes 27 zum Sollwert der aufgelegten Last in Parts-per-million [ppm] aufgetragen. Beide Figuren 7 und 8 beziehen sich auf dieselbe Kraftmessvorrichtung 1, welche einen Wägebereich von 0 - 400g hat. In Figur 7 ist die Kraftmessvorrichtung 1 im Nullpunkt, d.h. es wird keine Kraft auf den Lastaufnahmebereich 12 ausgeübt, und Figur 8 stellt die Robustheit bei 400g dar. In beiden Figuren 7 und 8 ist gut zu erkennen, dass bei tiefen Schwingungsfrequenzen im vorliegenden Fall eine enorme Verbesserung bis um das zehnfache erreicht werden kann (die Kraftmessvorrichtung 1 hat eine bessere Robustheit gegenüber Schwingungen und/oder Vibrationen), während mit zunehmend höheren Schwingungsfrequenzen sich die Robustheit wieder angleicht.

Wird das erfinderische Verfahren in Kraftmessvorrichtungen 1 von dynamischen Kontrollwaagen angewendet, kann eine schnellere Gewichtskraftbestimmung erreicht werden, wie dies in Figur 9 veranschaulicht wird. Die zu verwiegenden Produkte gelangen vom Zuführband auf das Wägeband und vom Wägeband auf das Abführband. Dabei wird das Wägeband, folglich auch der Anzeigewert 27, in eine Schwingung versetzt, worauf die Positionskontrolleinheit 23 durch Regelung des Spulenstroms 24 den Wägebalken 17 bzw. das Kraftübertragungsgestänge 117 wieder in die Einspiellage zurückführt. Der Signalverlauf $F'_A$ des Anzeigewertes einer Kontrollwaage mit einer Kraftmessvorrichtung nach dem Stand der Technik schwingt sich aufgrund der Mittelwertabweichung M (siehe Figur 6) auf einer vom Sollwert abweichenden asymptotischen Kurve $F'_M$ ein, welche sich mit Abklingen der Schwingung, und damit gleichzeitigem Verringern der Mittelwertabweichung M, dem Sollwert annähert. Eine Kraftmessvorrichtung 1, welche den Anzeigewert 27 nach dem erfinderischen Verfahren bestimmt, schwingt von Anfang an auf den Sollwert ein. Der Unterschied ist an den beiden gefilterten Signalverläufen $F'_{Am}$ und $F'_{Bm}$ sichtbar, welche beide denselben elektrischen Filter verwenden und zirka nach eineinhalb Perioden den Mittelwert deren Signalverläufe $F'_A$ und $F'_B$ erreichen. Während sich der Signalverlauf $F'_{Bm}$ schon nach der Zeit $t_B$ innerhalb des Toleranzbandes des Sollwertes befindet, erreicht der Signalverlauf $F'_{Am}$ das Toleranzband erst nach Ablauf der Zeit $t_A$ welche grösser als $t_B$ ist. Das Toleranzband des Sollwertes beschreibt ab welchem Wert der Anzeigewert 27 die Genauigkeitsanforderung für die Verwiegung erfüllt. Je eher also der Anzeigewert 27 das Toleranzband erreicht, umso schneller können die Produkte über das Wägeband geführt werden. Umgekehrt könnte man das Toleranzband aufgrund von höheren Genauigkeitsanforderungen auch schmaler definieren um in der gleichen Zeit $t_A$ innerhalb des Toleranzbandes zu gelangen. Dies bedeutet demnach ein gleich hoher Durchsatz an Produkten, wobei die Genauigkeit des Anzeigewertes 27 gesteigert wird.

Obwohl die Erfindung durch die Darstellung von mehreren spezifischen Ausführungsbeispielen beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

**Bezugszeichenliste**

| | |
|---|---|
| 1 | Kraftmessvorrichtung |
| 100 | Kraftmesszelle eines Direktmesssystems |
| 11, 111 | Feststehender Bereich |
| 12, 112 | Lastaufnahmebereich |
| 13 | Koppel |
| 14, 114 | Parallelführungen |
| 15 | Schale |
| 16 | Biegelager |
| 17 | Wägebalken |
| 117 | Kraftübertragungsgestänge |
| 18, 118 | Messaufnehmer |
| 19, 119 | Magnetsystem |
| 20, 120 | Spule |
| 21 | Positionssensor |
| 22, 22' | Positionssignal |
| 23 | Positionskontrolleinheit |
| 24 | Stärke des Spulenstroms, Stromstärke |
| 25 | Kompensationskraft |
| 26 | Verarbeitungseinheit |
| 27 | Anzeigewert |
| 28 | zusätzlicher Positionssensor |
| 30 | Übertragungsmittel |
| A | Ideale Systemkennlinie |
| $B_i$, $B_1$, $B_2$, $B_3$ | Reale Systemkennlinie |
| $I_0$ | Spulenstrom in der Einspiellage des Wägebalkens |
| $I_A$ | Spulenstrom bei Bestimmung anhand der idealen Systemkennlinie |
| $I_B$ | Spulenstrom bei Bestimmung anhand der realen Systemkennlinie |
| $I_{Am}$ | Mittelwert des Spulenstrom bei Bestimmung anhand der |
| $I_{Bm}$ | idealen Systemkennlinie Mittelwert des Spulenstrom bei Bestimmung anhand der realen Systemkennlinie |

| F | Kraft auf den Lastaufnahmebereich |
| F' | Berechnete Kraft |
| x | Wägebalkenposition |
| z | Störgrösse |
| $T_i$ | Temperatursignal |
| t | Zeitparameter der Übertragungsfunktion |
| M | Mittelwertabweichung |
| $F'_A$ | Signalverlauf des Anzeigewertes 27 einer Kontrollwaage nach Stand der Technik |
| $F'_B$ | Signalverlauf des Anzeigewertes 27 einer erfindungsgemässen Kontrollwaage |
| $F'_M$ | Sollwertabweichende Gerade |
| $F'_{Am}$ | Gefilterter Signalverlauf des Anzeigewertes 27 einer Kontrollwaage nach Stand der Technik |
| $F'_{Bm}$ | Gefilterter Signalverlauf des Anzeigewertes 27 einer erfindungsgemässen Kontrollwaage |
| $t_A$ | Zeit für das Erreichen des Toleranzbandes einer Kontrollwaage nach Stand der Technik |
| $t_B$ | Zeit für das Erreichen des Toleranzbandes einer erfindungsgemässen Kontrollwaage |

**Patentansprüche**

1. Verfahren zur Gewichtskraftbestimmung einer aufgelegten Last, für eine nach dem elektromagnetischen Kraftkompensationsprinzip arbeitende Kraftmessvorrichtung (1), umfassend

   - einen Messaufnehmer (18, 118) aufweisend eine in einem Magnetsystem und relativ zu diesem (19, 119) bewegliche Spule (20, 120), welche von einem elektrischen Strom (24) durchflossen werden kann,
   - eine kraftübertragende mechanische Verbindung zwischen einem Lastaufnahmebereich (12, 112) und der Spule (20, 120) oder dem Magnetsystem (19, 119) des Messaufnehmers (18, 118), und
   - einen die durch das Auflegen der Last auf den Lastaufnahmebereich (12, 112) verursachte Auslenkung der Spule (20, 120) aus ihrer Einspiellage in Bezug auf das Magnetsystem (19, 119) ermittelnden Positionssensor (21, 28), wobei der elektrische Strom (24) durch die Spule (20, 120) dazu dient die Spule (20, 120) und den mit der Spule (20, 120) oder dem Magnetsystem (19, 119) verbundene Lastaufnahmebereich (12, 112), durch die elektromagnetische Kraft zwischen der Spule (20, 120) und dem Magnetsystem (19, 119), in die Einspiellage zurückzuführen und/oder dort zu halten,
   **dadurch gekennzeichnet, dass** zur Berechnung der Gewichtskraft der aufgelegten Last die Grösse des elektrischen Stromes (24) und die Grösse der Auslenkung der Spule (20, 120) aus ihrer Einspiellage verwendet werden.

2. Verfahren zur Gewichtskraftbestimmung nach Anspruch 1, **dadurch gekennzeichnet, dass** die Grösse der Auslenkung der Spule (20, 120) aus ihrer Einspiellage mittels desjenigen Positionssensors (21) ermittelt wird, welcher einer Positionskontrolleinheit (23) dazu dient, den elektrischen Strom (24) durch die Spule (20, 120) so zu regeln, dass die Spule (20, 120) und der mit der Spule (20, 120) oder dem Magnetsystem (19, 119) verbundene Lastaufnahmebereich (12, 112) durch die elektromagnetische Kraft zwischen der Spule (20, 120) und dem Magnetsystem (19, 119) in die Einspiellage zurückgeführt werden.

3. Verfahren zur Gewichtskraftbestimmung nach Anspruch 1, **dadurch gekennzeichnet, dass** die Grösse der Auslenkung der Spule (20, 120) aus ihrer Einspiellage mittels eines zusätzlichen Positionssensors (28) ermittelt wird.

4. Verfahren zur Gewichtskraftbestimmung nach einem der Ansprüche 1 bis 3, **dadurch gekennzeichnet, dass** für die Berechnung der Gewichtskraft der aufgelegten Last ein in einer Verarbeitungseinheit (26) abgespeichertes Übertragungsmittel (30), welches als Rechenvorschrift einen Bezug zwischen der Grösse des elektrischen Stromes (24) und der Grösse der Auslenkung der Spule (20, 120) aus ihrer Einspiellage zur Gewichtskraftbestimmung herstellt, verwendet wird.

5. Verfahren zur Gewichtskraftbestimmung nach Anspruch 4, **dadurch gekennzeichnet, dass** das Übertragungsmittel (30) als eine Übertragungstabelle mit zur Grösse der Auslenkung der Spule (20, 120) aus ihrer Einspiellage und zur Grösse des elektrischen Stromes (24) zugehörigen Werten der Gewichtskraft der aufgelegten Last und/oder als eine Übertragungsfunktion mit mindestens einem Parameter und mit mindestens der Grösse der Auslenkung der Spule aus ihrer Einspiellage (20, 120) und der Grösse des elektrischen Stromes (24) als Eingangsgrössen abgespeichert ist.

6. Verfahren zur Gewichtskraftbestimmung nach Anspruch 5, **dadurch gekennzeichnet, dass** der mindestens eine Parameter der Übertragungsfunktion als eine Parametertabelle und/oder als eine Systemkennlinie abgespeichert ist.

7. Verfahren zur Gewichtskraftbestimmung nach einem der Ansprüche 5 oder 6, **dadurch gekennzeichnet, dass**

   der mindestens eine Parameter der Übertragungsfunktion lastabhängig ist.

8. Verfahren zur Gewichtskraftbestimmung nach einem der Ansprüche 5 bis 7, **dadurch gekennzeichnet, dass**

   die Ermittlung der Werte der Übertragungstabelle und/oder die Ermittlung des mindestens einen Parameters der Übertragungsfunktion durch Variieren der Auslenkung der Spule (20, 120) und im Wesentlichen zeitgleichem Messen der zur Auslenkung der Spule (20, 120) zugehörigen Grösse des elektrischen Stromes (24) erfolgt, und/oder durch Variieren der Grösse des elektrischen Stromes (24) und im Wesentlichen zeitgleichem Messen der zur Grösse des elektrischen Stromes (24) zugehörigen Auslenkung der Spule (20, 120) erfolgt, und/oder durch Analyse der Auslenkung der Spule (20, 120) in Bezug auf die Grösse des elektrischen Stromes (24) bei Vibrationen erfolgt.

9. Verfahren zur Gewichtskraftbestimmung nach Anspruch 8, **dadurch gekennzeichnet, dass**

   die Ermittlung der Werte der Übertragungstabelle und/oder die Ermittlung des mindestens einen Parameters der Übertragungsfunktion jeweils ohne und mit einem den Lastaufnahmebereich (12, 112) beaufschlagenden Gewicht durchgeführt wird, wobei es sich bei dem Gewicht um ein extern aufgelegtes oder ein intern mittels einer Vorrichtung aufgelegtes Gewicht handeln kann.

10. Verfahren zur Gewichtskraftbestimmung nach einem der Ansprüche 4 bis 9, **dadurch gekennzeichnet, dass**

    das Übertragungsmittel (30) für jede Kraftmessvorrichtung (1) individuell oder für denselben Typ einer Kraftmessvorrichtung (1) generisch erstellt wird.

11. Kraftmesszelle nach dem elektromagnetischen Kraftkompensationsprinzip arbeitend, für eine gravimetrische Kraftmessvorrichtung (1) zur Gewichtskraftbestimmung nach einem der Ansprüche 1 bis 10.

12. Computergestütztes Programm zur Ausführung eines Verfahrens zur Gewichtskraftbestimmung nach einem der Ansprüche 1 bis 10 mit Ausgabe eines Anzeigewertes (27) der Gewichtskraft (F) und mindestens die Grösse des elektrischen Stromes (24) und die Grösse der Auslenkung der Spule (20, 120) aus ihrer Einspiellage als Eingangsgrössen verwendend, für eine nach dem elektromagnetischen Kraftkompensationsprinzip arbeitende gravimetrische Kraftmessvorrichtung (1).

13. Computergestütztes Programm zur Ausführung des Verfahrens zur Gewichtskraftbestimmung nach Anspruch 12, **dadurch gekennzeichnet, dass** zusätzlich ein Zeitsignal und mindestens ein Temperatursignal als Eingangsgrössen verwendet werden.

14. Computergestütztes Programm zur Ausführung des Verfahrens zur Gewichtskraftbestimmung nach einem der Ansprüche 12 oder 13, **dadurch gekennzeichnet, dass**

    das computergestützte Programm auf ein Übertragungsmittel (30) nach einem der Ansprüche 3 bis 10 zugreift.

15. Kontrollwaagensystem zur Verwiegung von Wägegüter mit einem Zuführband zum Zuführen der Wägegüter, einem Abführband zum Abführen der Wägegüter und einem mit einer Kraftmessvorrichtung (1) verbundenen Wägeband, **dadurch gekennzeichnet, dass**

    die Berechnung der Gewichtskraft in einem Terminal mittels eines computergestütztem Programm nach einem der Ansprüche 12 bis 14 erfolgt.

## Claims

1. Method of determining a weight force exerted by a load on a force-measuring device (1) that operates according to the principle of electromagnetic force compensation and comprises

   - a measurement transducer (18, 118) with a coil (20, 120) which is arranged in a magnet system (19, 119) so as to be movable relative to the latter and which can carry an electrical current (24),
   - a force-transmitting mechanical connection between a load-receiving part (12, 112) and the coil (20, 120) or magnet system (19, 119) of the measurement transducer (18, 118), and
   - a position sensor (21, 28) which serves to determine a displacement of the coil (20, 120) from its settling position relative to the magnet system (19, 119) which occurs as a result of placing the load on the load-receiving part (12, 112), wherein the electrical current (24) flowing through the coil (20, 120) has the function to generate an electromagnetic force between the coil (20, 120) and the magnet system (119, 119) whereby the coil (20, 120) and the load-receiving part (12, 112) that is connected to the coil (20, 120) or the magnet system (119, 119) are returned to, and/or held at, the settling position,

   **characterized in that**
   the magnitude of the electrical current (24) and the amount of displacement of the coil (20, 120) from its settling position are used to calculate the weight force exerted by the applied load.

2. Method of determining a weight force in accordance with claim 1, **characterized in that** the amount of displacement of the coil (20, 120) from its settling position is determined by means of the same position sensor (21) which provides the input signal to a position-controlling unit (23) which regulates the electrical current (24) through the coil (20, 120) in such a way that the coil (20, 120) and the load-receiving part (12, 112) connected to the coil (20, 120) or the magnet system (19, 119) are returned to the settling position by the electromagnetic force between the coil (20, 120) and the magnet system (19, 119).

3. Method of determining a weight force in accordance with claim 1, **characterized in that** the amount of displacement of the coil (20, 120) from its settling position is determined by means of an additional position sensor (28).

4. Method of determining a weight force in accordance with one of the claims 1 to 3, **characterized in that** to calculate the weight force exerted by the load, a transfer means (30) is used which comprises an arithmetic instruction that is stored in a processing unit (26) and connects the magnitude of the electrical current (24) and the amount of the displacement of the coil (20, 120) from its settling position to the determination of the weight force.

5. Method of determining a weight force in accordance with claim 4, **characterized in that** the transfer means (30) is stored as a transfer table in which values of the amount of the displacement of the coil (20, 120) from its settling position and values of the magnitude of the electrical coil current (24) are correlated with values of the weight force of the applied load, and/or that the transfer means (30) is stored as a transfer function which has at least one parameter and uses as input quantities at least the magnitude of the electrical coil current (24) and the amount of the displacement of the coil (20, 120) from its settling position.

6. Method of determining a weight force in accordance with claim 5, **characterized in that** the at least one parameter of the transfer function is stored as a parameter table and/or as a system-characteristic curve.

7. Method of determining a weight force in accordance with one of the claims 5 or 6, **characterized in that** the at least one parameter of the transfer function is load-dependent.

8. Method of determining a weight force in accordance with one of the claims 5 to 7, **characterized in that** the values of the transfer table and/or the at least one parameter of the transfer function are determined by varying the displacement of the coil (20, 120) and by measuring in essence simultaneously the magnitude of the electrical coil current (24) associated with the displacement of the coil, and/or by varying the magnitude of the electrical coil current (24) and by measuring in essence simultaneously the displacement of the coil (20, 120) associated with the magnitude of the electrical coil current (24), and/or by analyzing the displacement of the coil (20, 120) relative to the magnitude of the electrical coil current (24) in the presence of vibrations.

9. Method of determining a weight force in accordance with claim 8, **characterized in that** the determination of the values of the transfer table and/or the determination of the at least one parameter of the transfer function is made both with and without a weight being placed on the load-receiving part (12, 112), wherein the weight can be either a weight that is set on the load-receiving part (12, 112) from the outside or a weight that can be engaged internally by means of a mechanism.

10. Method of determining a weight force in accordance with one of the claims 4 to 9, **characterized in that** the transfer means (30) is produced individually for each force-measuring device (1), or generically for force-measuring devices (1) of the same type.

11. Force-measuring cell, functioning in accordance with the principle of electromagnetic force compensation, for a gravimetric force-measuring device (1) that is operable to determine a weight force in accordance with one of the claims 1 to 10.

12. Computer program for the implementation of the method of determining a weight force in accordance with one of the claims 1 to 10 in a gravimetric force-measuring device (1) which operates according to the principle of electromagnetic force compensation, wherein a display value (27) of the weight force (F) is produced as output of said program and at least the magnitude of the electrical coil current (24) and the amount of the displacement of the coil (20, 120) from its settling position are used as inputs.

13. Computer program according to claim 12 for the implementation of the method of determining a weight force, **characterized in that** a time signal and at least one temperature signal are used additionally as input quantities.

14. Computer program according to one of the claims 12 or 13 for the implementation of the method of determining a weight force, **characterized in that**

the computer program calls up a transfer means (30) according to one of the claims 3 to 10.

15. Checkweighing system serving to weigh objects, comprising an infeed conveyor belt to carry the weighing objects in, an outgoing conveyor belt to carry the weighing objects out, and a weighing conveyor belt which is connected to a force-measuring device (1), **characterized in that**
the calculation of the weight force is performed in a terminal by means of a computer program according to one of the claims 12 to 14.

**Revendications**

1. Procédé pour la détermination de la pesanteur d'une charge déposée, pour un dispositif de mesure de force (1) fonctionnant selon le principe de compensation de force électromagnétique, comprenant

   - un capteur de mesure (18, 118) comportant une bobine (20, 120) disposée dans un système d'aimant (19, 119) et déplaçable par rapport à celui-ci, laquelle peut être traversée par un courant électrique (24),
   - une liaison mécanique de transmission de force entre une région de réception de charge (12, 112) et la bobine (20, 120) ou le système d'aimant (19, 119) du capteur de mesure (18, 118), et
   - un capteur de position (21, 28) détectant une déviation de la bobine (20, 120) hors de sa position d'équilibre par rapport au système d'aimant (19, 119), occasionnée par le dépôt de la charge sur la région de réception de charge (12, 112),

   dans lequel le courant électrique (24) à travers la bobine (20, 120) sert à remettre la bobine (20, 120) et la région de réception de charge (12, 112) reliée à la bobine (20, 120) ou au système d'aimant (19, 119) dans la position d'équilibre et/ou à les y maintenir, par la force électromagnétique entre la bobine (20, 120) et le système d'aimant (19, 119), **caractérisé en ce que**
   l'amplitude du courant électrique (24) et l'amplitude de la déviation de la bobine (20, 120) hors de sa position d'équilibre sont utilisées pour calculer la pesanteur de la charge déposée.

2. Procédé pour la détermination de la pesanteur selon la revendication 1, **caractérisé en ce que** l'amplitude de la déviation de la bobine (20, 120) hors de sa position d'équilibre est déterminée par le capteur de position (21) servant, pour une unité de commande de position (23), à régler le courant électrique (24) à travers la bobine (20, 120) de manière à ce que la bobine (20, 120) et la région de réception de charge (12, 112) reliée à la bobine (20, 120) ou au système d'aimant (19, 119) soient remises dans la position d'équilibre par la force électromagnétique entre la bobine (20, 120) et le système d'aimant (19, 119).

3. Procédé pour la détermination de la pesanteur selon la revendication 1, **caractérisé en ce que** l'amplitude de la déviation de la bobine (20, 120) hors de sa position d'équilibre est déterminée au moyen d'un capteur de position (28) supplémentaire.

4. Procédé pour la détermination de la pesanteur selon l'une des revendications 1 à 3, **caractérisé en ce que** pour le calcul de la pesanteur de la charge déposée, il est prévu un moyen de transmission (30) stocké dans une unité de traitement (26), lequel établit un rapport entre l'amplitude du courant électrique (24) et l'amplitude de la déviation de la bobine (20, 120) hors de sa position d'équilibre comme règle de calcul pour déterminer la pesanteur.

5. Procédé pour la détermination de la pesanteur selon la revendication 4, **caractérisé en ce que** le moyen de transmission (30) est stocké sous la forme d'un tableau de transmission avec des valeurs de la pesanteur de la charge déposée associées à l'amplitude de la déviation de la bobine (20, 120) hors de sa position d'équilibre et à l'amplitude du courant électrique (24), et/ou sous la forme d'une fonction de transmission avec au moins un paramètre et avec au moins l'amplitude de la déviation de la bobine (20, 120) hors de sa position d'équilibre et l'amplitude du courant électrique (24) en tant que grandeurs d'entrée.

6. Procédé pour la détermination de la pesanteur selon la revendication 5, **caractérisé en ce que** l'au moins un paramètre de la fonction de transmission est enregistré sous la forme d'un tableau de paramètres et/ou d'une caractéristique de système.

7. Procédé pour la détermination de la pesanteur selon l'une des revendications 5 ou 6, **caractérisé en ce que** l'au moins un paramètre de la fonction de transmission est dépendant de la charge.

8. Procédé pour la détermination de la pesanteur selon l'une des revendications 5 à 7, **caractérisé en ce que** la détermination des valeurs du tableau de transmission et/ou la détermination de l'au moins un paramètre de la fonction de transmission sont réalisées en faisant varier la déviation de la bobine (20, 120) et en mesurant quasiment simultanément l'amplitude du courant électrique (24) associée à la déviation de la bobine (20, 120), et/ou en faisant varier l'amplitude du courant électrique (24) et en mesurant quasiment simultanément la déviation de la bobine (20, 120) associée à l'amplitude du courant électrique (24), et/ou en analysant la déviation de la bobine (20, 120) par rapport à l'amplitude du courant électrique (24) pendant des vibrations.

9.  Procédé pour la détermination de la pesanteur selon la revendication 8, **caractérisé en ce que** la détermination des valeurs du tableau de transmission et/ou la détermination de l'au moins un paramètre de la fonction de transmission sont réalisées respectivement sans et avec un poids sollicitant la région de réception de charge (12, 112), le poids pouvant être un poids déposé de façon externe ou un poids déposé de façon interne au moyen d'un dispositif.

10. Procédé pour la détermination de la pesanteur selon l'une des revendications 4 à 9, **caractérisé en ce que** le moyen de transmission (30) est établi individuellement pour chaque dispositif de mesure de force (1) ou de façon générique pour un même type de dispositif de mesure de force (1).

11. Cellule de mesure de force fonctionnant selon le principe de compensation de force électromagnétique, pour un dispositif de mesure de force gravimétrique (1) pour la détermination de la pesanteur selon l'une des revendications 1 à 10.

12. Programme assisté par ordinateur pour l'exécution d'un procédé pour la détermination de la pesanteur selon l'une des revendications 1 à 10, comprenant la délivrance d'une valeur d'affichage (27) de la pesanteur (F) et utilisant au moins l'amplitude du courant électrique (24) et l'amplitude de la déviation de la bobine (20, 120) hors de sa position d'équilibre comme grandeurs d'entrée, pour un dispositif de mesure de force gravimétrique (1) fonctionnant selon le principe de compensation de force électromagnétique.

13. Programme assisté par ordinateur pour l'exécution du procédé pour la détermination de la pesanteur selon la revendication 12, **caractérisé en ce qu'**un signal temporel et au moins un signal de température peuvent en outre être utilisés comme grandeurs d'entrée.

14. Programme assisté par ordinateur pour l'exécution du procédé pour la détermination de la pesanteur selon l'une des revendications 12 ou 13, **caractérisé en ce que** le programme assisté par ordinateur accède à un moyen de transmission (30) selon l'une des revendications 3 à 10.

15. Système de balance de contrôle destiné à peser des produits à peser avec une bande d'alimentation pour l'alimentation des produits à peser, une bande d'évacuation pour l'évacuation des produits à peser et une bande de pesée reliée à un dispositif de mesure de force (1), **caractérisé en ce que** le calcul de la pesanteur est réalisé dans un terminal au moyen d'un programme assisté par ordinateur selon l'une des revendications 12 à 14.

Fig. 2

Fig. 1

**Fig. 3**

**Fig. 5**

**Fig. 9**

**Fig. 4**

**Fig. 6**

Fig. 8

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0430695 A2
- EP 0359978 A3
- US 4802541 A
- US 20030229600 A1